# FASCICULE DE BREVET EUROPEEN

(11) **EP 3 273 181 B1**
(45) Date de publication et mention de la délivrance du brevet: **14.10.2020**
(21) Numéro de dépôt: 17181983.2
(22) Date de dépôt: 18.07.2017
(51) Int. Cl.: F25B 5/02, F25B 40/02, F25B 40/06, F25B 41/04, B60H 1/00

(54) **BOUCLE DE CLIMATISATION DE VÉHICULE AUTOMOBILE ET PROCÉDÉS DE FONCTIONNEMENT D'UNE TELLE BOUCLE**
KRAFTFAHRZEUGKLIMAANLAGEKREISLAUF UND BETRIEBSVERFAHREN FÜR EINEN SOLCHEN KREISLAUF
MOTOR VEHICLE AIR CONDITIONING LOOP AND METHODS OF OPERATING SUCH A LOOP

(30) Priorité: 22.07.2016 FR 1657008
(43) Date de publication de la demande: 24.01.2018
(73) Titulaire: Valeo Systemes Thermiques, 78320 Le Mesnil Saint Denis (FR)
(72) Inventeur: HALLER, Régine, 78322 LE MESNIL SAINT-DENIS CEDEX (FR); YAHIA, Mohamed, 78322 LE MESNIL SAINT-DENIS CEDEX (FR)
(74) Mandataire: Tran, Chi-Hai

(56) Documents cités:
- EP-A1- 1 262 344
- WO-A1-2014/048482
- DE-A1- 3 240 353
- DE-A1- 10 224 754
- DE-A1- 10 256 665
- DE-A1-102014 105 612
- FR-A1- 3 025 299
- US-A- 6 161 391

## Description

L'invention se rapporte à une boucle de climatisation de véhicule automobile et ses procédés de fonctionnement.

Les véhicules automobiles actuels comportent de plus en plus souvent une boucle de climatisation. Généralement, dans une boucle de climatisation « classique », un fluide réfrigérant passe successivement dans un compresseur, un condenseur placé en contact avec un flux d'air extérieur au véhicule automobile pour libérer de la chaleur, un dispositif de détente et un évaporateur placé en contact avec un flux d'air intérieur du véhicule automobile pour le refroidir.

Certains véhicules sont dorénavant équipés d'un alterno-démarreur qui permet un arrêt et un redémarrage automatique du moteur, par exemple à un feu tricolore, à un stop ou dans les embouteillages, afin de réduire la consommation de carburant et également de réduire les émissions polluantes. Cependant, lors de l'arrêt du moteur, le compresseur qui assure la climatisation est lui aussi arrêté, ce qui entraîne une coupure de la climatisation et une perte de confort pour les occupants du véhicule automobile.

Une solution connue à ce problème est de placer une batterie thermique dans la boucle de climatisation, notamment sur une branche du circuit parallèle à l'évaporateur. Une pompe électrique est également ajoutée sur cette branche parallèle afin de faire circuler le fluide réfrigérant en phase liquide entre la batterie thermique et l'évaporateur lorsque le moteur et le condenseur sont à l'arrêt. Cela permet alors que de l'air froid soit toujours expulsé de l'évaporateur et ainsi permet de conserver un confort thermique pour les occupants du véhicule automobile.

Cependant, une telle solution n'est pas optimale car l'utilisation d'une telle pompe électrique peut entraîner des problèmes de cavitation. En effet, une pompe électrique ne peut fonctionner correctement que si le fluide réfrigérant est en phase liquide. Pour cela il est généralement nécessaire d'utiliser une pompe ayant une hauteur de charge nette absolue à l'aspiration (ou NPSH pour l'anglicisme Net Positive Suction Head) suffisante pour un sous refroidissement du fluide réfrigérant de l'ordre de 5°C ou alors d'utiliser une pompe à canal latéral mais dont le rendement est inférieur à 50 %. Cela peut ainsi fortement augmenter les coûts de production d'une telle boucle de climatisation pour une efficacité limitée.

L'utilisation d'une batterie thermique est aussi connue du document DE 32 40 353 A1. Ce document divulgue une architecture de pompe à chaleur pour des applications de chauffage dans le domaine du bâtiment, dans laquelle circule un fluide réfrigérant et comportant dans le sens de circulation du fluide réfrigérant :
° un compresseur,
° un premier échangeur de chaleur disposé en aval du compresseur,
° un premier dispositif de détente disposé en aval du premier échangeur de chaleur,
∘ un deuxième échangeur de chaleur disposé en aval du premier dispositif de détente,
la boucle de climatisation comportant en outre un circuit de stockage thermique reliant un premier point de jonction disposé en aval du premier échangeur de chaleur, entre ledit premier échangeur de chaleur et le dispositif de détente, et un deuxième point de jonction disposé en amont du compresseur, entre le deuxième échangeur de chaleur et ledit compresseur,
ledit circuit de stockage thermique comportant :
∘ un deuxième dispositif de détente disposé en aval du premier point de jonction,
∘ une batterie thermique disposée en aval du deuxième dispositif de détente et
∘ une branche de contournement du premier échangeur de chaleur reliant un cinquième point de jonction, disposé en amont du premier échangeur de chaleur et un sixième point de jonction, disposé entre le deuxième dispositif de détente et la batterie thermique.

Un des buts de la présente invention est donc de remédier au moins partiellement aux inconvénients de l'art antérieur et de proposer une boucle de climatisation améliorée.

La présente invention concerne donc une boucle de climatisation selon la revendication 1, pour véhicule automobile, dans laquelle circule un fluide réfrigérant et comportant dans le sens de circulation du fluide réfrigérant :
∘ un compresseur,
∘ un premier échangeur de chaleur disposé en aval du compresseur,
∘ un premier dispositif de détente disposé en aval du premier échangeur de chaleur,
∘ un deuxième échangeur de chaleur disposé en aval du premier dispositif de détente,
la boucle de climatisation comportant en outre un circuit de stockage thermique reliant un premier point de jonction disposé en aval du premier échangeur de chaleur, entre ledit premier échangeur de chaleur et le dispositif de détente, et un deuxième point de jonction disposé en amont du compresseur, entre le deuxième échangeur de chaleur et ledit compresseur,
ledit circuit de stockage thermique comportant :
∘ un deuxième dispositif de détente disposé en aval du premier point de jonction,
∘ une batterie thermique disposée en aval du deuxième dispositif de détente
∘ une branche de raccordement reliant un troisième point de jonction, disposé entre la batterie thermique et le deuxième point de jonction et un quatrième point de jonction, disposé entre le premier point de jonction et le premier dispositif de détente, et
∘ une branche de contournement du premier échangeur de chaleur reliant un cinquième point de jonction, disposé en amont du premier échangeur de chaleur et un sixième point de jonction, disposé entre le deuxième dispositif de détente et la batterie thermique.

Un tel circuit de stockage thermique permet l'utilisation d'un compresseur électrique afin de faire circuler le fluide réfrigérant entre la batterie thermique et le deuxième échangeur de chaleur, notamment lorsque le véhicule automobile comporte un alterno-démarreur et que le moteur est à l'arrêt et ce afin que de l'air ayant échangé de l'énergie calorifique soit toujours expulsé du deuxième échangeur de chaleur. Cela permet ainsi de conserver un confort optimal pour les occupants du véhicule automobile. L'utilisation d'un compresseur électrique permet de s'affranchir des problèmes éventuels de cavitation.

Selon un aspect de l'invention, la boucle de climatisation comporte un échangeur de chaleur interne permettant un échange de chaleur entre le fluide réfrigérant en sortie du premier échangeur de chaleur et le fluide réfrigérant en sortie du deuxième échangeur de chaleur.

Selon un autre aspect de l'invention, le compresseur est un compresseur électrique et le cinquième point de jonction est disposé en aval du compresseur, entre ledit compresseur et le premier échangeur de chaleur.

Selon un autre aspect de l'invention, le compresseur est un compresseur électrique apte à fonctionner avec un taux de compression inférieur ou égal à 1,5, de préférence inférieur ou égal à 1,3.

Selon un autre aspect de l'invention, la boucle de climatisation comporte un dispositif de gestion du flux de fluide réfrigérant de sorte à permettre :
∘ la redirection du fluide réfrigérant en provenance du premier échangeur de chaleur vers le premier dispositif de détente et/ou vers le deuxième dispositif de détente,
∘ la redirection du fluide réfrigérant en provenance du deuxième dispositif de détente vers la batterie thermique,
∘ la redirection du fluide réfrigérant en provenance du compresseur vers la batterie thermique ou vers le premier échangeur de chaleur,
∘ la redirection du fluide réfrigérant en provenance de la batterie thermique vers le deuxième point de jonction ou vers le quatrième point de jonction.

Selon un autre aspect de l'invention, le dispositif de gestion du flux de fluide réfrigérant comporte :
∘ une première vanne d'arrêt disposée dans le sens de circulation du fluide réfrigérant, en amont du premier point de jonction, entre le cinquième point de jonction et ledit premier point de jonction,
∘ une deuxième vanne d'arrêt disposée sur le circuit de stockage thermique, entre le deuxième point de jonction et le troisième point de jonction,
∘ une troisième vanne d'arrêt disposée sur la branche de contournement entre le cinquième point de jonction et le sixième point de jonction,
∘ un premier clapet anti-retour disposé dans le sens de circulation du fluide réfrigérant, entre le premier point de jonction et le sixième point de jonction de sorte à ne laisser passer le fluide réfrigérant qu'en provenance dudit premier point de jonction,
∘ un deuxième clapet anti-retour disposé sur la branche de raccordement, de sorte à ne laisser passer le fluide réfrigérant qu'en provenance du troisième point de jonction, et
∘ un troisième clapet anti-retour disposé dans le sens de circulation du fluide réfrigérant, entre le deuxième point de jonction et le cinquième point de jonction de sorte à ne laisser passer le fluide réfrigérant qu'en provenance du deuxième point de jonction.

Selon un autre aspect de l'invention, le cinquième point de jonction est disposé sur le circuit de stockage thermique entre le deuxième point de jonction et le troisième point de jonction et que la branche de contournement comporte un compresseur électrique additionnel apte à faire circuler le fluide caloporteur depuis le cinquième point de jonction vers le sixième point de jonction.

Selon un autre aspect de l'invention, le compresseur électrique additionnel est apte à fonctionner avec un taux de compression inférieur ou égal à 1,5, de préférence inférieur ou égal à 1,3.

Selon un autre aspect de l'invention, la boucle de climatisation comporte un dispositif de gestion du flux de fluide réfrigérant de sorte à permettre :
∘ la redirection du fluide réfrigérant en provenance du premier échangeur de chaleur vers le premier dispositif de détente et/ou vers le deuxième dispositif de détente,
∘ la redirection du fluide réfrigérant en provenance du deuxième dispositif de détente vers la batterie thermique,
∘ la redirection du fluide réfrigérant en provenance du deuxième échangeur de chaleur vers le compresseur ou vers le compresseur électrique additionnel,
∘ la redirection du fluide réfrigérant en provenance de la batterie thermique vers le deuxième point de jonction ou vers le quatrième point de jonction.

Selon un autre aspect de l'invention, le dispositif de gestion du flux de fluide réfrigérant comporte :
∘ une première vanne d'arrêt disposée dans le sens de circulation du fluide réfrigérant, en amont du premier point de jonction, entre le deuxième point de jonction et ledit premier point de jonction,
∘ une deuxième vanne d'arrêt disposée sur le circuit de stockage thermique entre le troisième point de jonction et le cinquième point de jonction,
∘ une troisième vanne d'arrêt disposée sur la branche de contournement entre le cinquième point de jonction et le sixième point de jonction,
∘ un premier clapet anti-retour disposé dans le sens de circulation du fluide réfrigérant, entre le premier point de jonction et le sixième point de jonction de sorte à ne laisser passer le fluide réfrigérant qu'en provenance dudit premier point de jonction,
∘ un deuxième clapet anti-retour disposé sur la branche de raccordement, de sorte à ne laisser passer le fluide réfrigérant qu'en provenance du troisième point de jonction, et
∘ un quatrième clapet anti-retour disposé sur la branche de contournement, dans le sens de circulation du fluide réfrigérant, en aval cinquième point de jonction, entre ledit cinquième point de jonction et le sixième point de jonction de sorte à ne laisser passer le fluide réfrigérant qu'en provenance dudit cinquième point de jonction.

La présente invention concerne également un procédé selon la revendication 11 de fonctionnement d'une boucle de climatisation telle que décrite précédemment, selon un mode de fonctionnement mixte, dans lequel le fluide réfrigérant passe successivement dans le compresseur, le premier échangeur de chaleur, le premier point de jonction où le flux de fluide réfrigérant se divise et où :
∘ une première portion du fluide réfrigérant passe par le premier dispositif de détente, le deuxième échangeur de chaleur et rejoint le deuxième point de jonction,
∘ une deuxième portion du fluide réfrigérant passe par le deuxième dispositif de détente, la batterie thermique et rejoint le deuxième point de jonction, depuis le deuxième point de jonction, le fluide réfrigérant rejoint ensuite le compresseur.

La présente invention concerne également un procédé selon la revendication 12 de fonctionnement d'une boucle de climatisation telle que décrite précédemment, selon un mode de stockage de froid, dans lequel le fluide réfrigérant passe successivement dans le compresseur, le premier échangeur de chaleur, le premier point de jonction où le fluide réfrigérant est totalement redirigé vers le deuxième dispositif de détente, le fluide réfrigérant passant ensuite dans la batterie thermique et rejoignant ensuite le compresseur.

La présente invention concerne également un procédé selon la revendication 13 de fonctionnement d'une boucle de climatisation telle que décrite précédemment, selon un mode de fonctionnement de restitution d'énergie calorifique, dans lequel le fluide réfrigérant en provenance de la branche de contournement passe successivement dans la batterie thermique, la branche de raccordement, le premier dispositif de détente, le deuxième échangeur de chaleur et retourne à la branche de contournement.

D'autres avantages de l'invention apparaîtront plus clairement à la lecture de la description suivante, donnée à titre d'exemple illustratif et non limitatif, et des dessins annexés parmi lesquels :
- la figure 1 montre une représentation schématique d'une boucle de climatisation selon un premier mode de réalisation,
- la figure 2 montre une représentation schématique d'une boucle de climatisation selon un deuxième mode de réalisation,
- la figure 3a montre la boucle de climatisation de la figure 1 selon une variante du premier mode de réalisation,
- la figure 3b montre la boucle de climatisation de la figure 2 selon une variante du deuxième mode de réalisation,
- la figure 4a montre la boucle de climatisation de la figure 1 selon un premier mode de fonctionnement,
- la figure 4b montre la boucle de climatisation de la figure 3a selon le premier mode de fonctionnement,
- la figure 5a montre la boucle de climatisation de la figure 2 selon le premier mode de fonctionnement,
- la figure 5b montre la boucle de climatisation de la figure 3b selon le premier mode de fonctionnement,
- la figure 6a montre la boucle de climatisation de la figure 1 selon un deuxième mode de fonctionnement,
- la figure 6b montre la boucle de climatisation de la figure 3a selon le deuxième mode de fonctionnement,
- la figure 7a montre la boucle de climatisation de la figure 2 selon le deuxième mode de fonctionnement,
- la figure 7b montre la boucle de climatisation de la figure 3b selon le deuxième mode de fonctionnement,
- la figure 8a montre la boucle de climatisation de la figure 1 selon un troisième mode de fonctionnement,
- la figure 8b montre la boucle de climatisation de la figure 3a selon le troisième mode de fonctionnement,
- la figure 9a montre la boucle de climatisation de la figure 2 selon le troisième mode de fonctionnement,
- la figure 9b montre la boucle de climatisation de la figure 3b selon le troisième mode de fonctionnement,
- la figure 10a montre la boucle de climatisation de la figure 1 selon un quatrième mode de fonctionnement,
- la figure 10b montre la boucle de climatisation de la figure 3a selon le quatrième mode de fonctionnement,
- la figure 11a montre la boucle de climatisation de la figure 2 selon le quatrième mode de fonctionnement,
- la figure 11b montre la boucle de climatisation de la figure 3b selon le quatrième mode de fonctionnement.

Sur les différentes figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées et/ou interchangées pour fournir d'autres réalisations mais selon les revendications annexées.

Dans la présente description, on peut indexer certains éléments ou paramètres, comme par exemple premier élément ou deuxième élément ainsi que premier paramètre et second paramètre ou encore premier critère et deuxième critère etc. Dans ce cas, il s'agit d'un simple indexage pour différencier et dénommer des éléments ou paramètres ou critères proches mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps par exemple pour apprécier tel ou tel critère.

Dans la présente description, on entend par « placé en amont » qu'un élément est placé avant un autre par rapport au sens de circulation d'un fluide. A contrario, on entend par « placé en aval » qu'un élément est placé après un autre par rapport au sens de circulation du fluide.

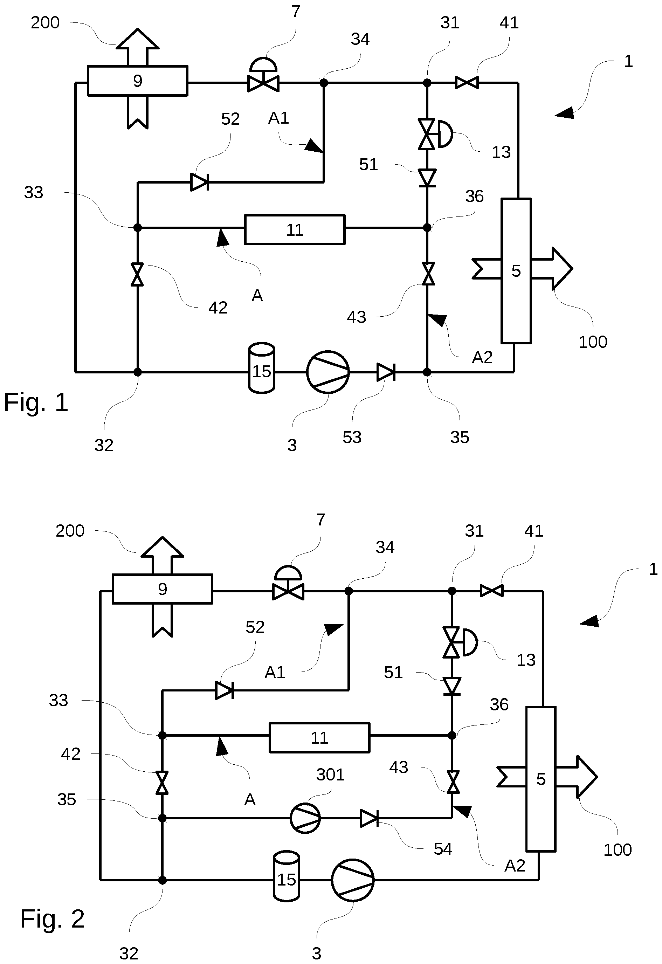

La figure 1 montre une boucle de climatisation 1 pour véhicule automobile dans laquelle circule un fluide réfrigérant. Cette boucle de climatisation 1 comporte dans le sens de circulation du fluide réfrigérant :
∘ un compresseur 3,
∘ un premier échangeur de chaleur 5 disposé en aval du compresseur 3. Ce premier échangeur de chaleur 5 peut être notamment destiné à être traversé par un flux d'air extérieur 100 au véhicule automobile.
∘ un premier dispositif de détente 7 disposé en aval du premier échangeur de chaleur 5, et
∘ un deuxième échangeur de chaleur 9 disposé en aval du premier dispositif de détente 7. Ledit deuxième échangeur 9 peut être quant à lui destiné à être traversé par un flux d'air intérieur 200 à destination de l'habitacle du véhicule automobile.

La boucle de climatisation 1 comporte en outre un circuit de stockage thermique A reliant un premier point de jonction 31 disposé en aval du premier échangeur de chaleur 5, entre ledit premier échangeur de chaleur 5 et le dispositif de détente 7, et un deuxième point de jonction 32 disposé en amont du compresseur 3, entre le deuxième échangeur de chaleur 9 et ledit compresseur 3,
Le circuit de stockage thermique A comporte :
∘ un deuxième dispositif de détente 13 disposé en aval du premier point de jonction 31,
∘ une batterie thermique 11 disposée en aval du deuxième dispositif de détente 13,
∘ une branche de raccordement A1 reliant un troisième point de jonction 33, disposé entre la batterie thermique 11 et le deuxième point de jonction 32 et un quatrième point de jonction 34, disposé entre le premier point de jonction 31 et le premier dispositif de détente 7, et
∘ une branche de contournement A2 du premier échangeur de chaleur 5 reliant un cinquième point de jonction 35, disposé en amont du premier échangeur de chaleur 5 et un sixième point de jonction 36, disposé entre le deuxième dispositif de détente 13 et la batterie thermique 11.

La batterie thermique 11 peut être par exemple une enceinte à l'intérieur de laquelle circule le fluide réfrigérant et contenant un matériau à changement de phase.

Un tel circuit de stockage thermique A permet l'utilisation d'un compresseur électrique afin de faire circuler le fluide réfrigérant entre la batterie thermique 11 et le deuxième échangeur de chaleur 9, notamment lorsque le véhicule automobile comporte un alterno-démarreur et que le moteur est à l'arrêt et ce afin que de l'air ayant échangé de l'énergie calorifique soit toujours expulsé du deuxième échangeur de chaleur 9. Cela permet ainsi de conserver un confort optimal pour les occupants du véhicule automobile. L'utilisation d'un compresseur électrique permet de s'affranchir des problèmes éventuels de cavitation.

Afin de limiter la consommation électrique, ce compresseur est avantageusement apte à fonctionner avec un taux de compression inférieur ou égal à 1,5, de préférence inférieur ou égal à 1,3.

Selon un premier mode de réalisation illustré à la figure 1, le compresseur électrique utilisé pour faire circuler le fluide réfrigérant entre la batterie thermique 11 et le deuxième échangeur de chaleur 9 lorsque que le moteur est à l'arrêt est le compresseur 3. Ce dernier ne peut donc pas être dans ce mode de réalisation un compresseur mécanique entraîné par le moteur du véhicule mais doit être un compresseur électrique 3.

Dans ce premier mode de réalisation, le cinquième point de jonction 35 est disposé en aval du compresseur 3, entre ledit compresseur 3 et le premier échangeur de chaleur 5. Cette position du cinquième point de jonction 35 est nécessaire pour que le compresseur 3 puisse envoyer du fluide réfrigérant dans le circuit de stockage thermique A.

Toujours selon ce premier mode de réalisation, la boucle de climatisation 1 peut comporter un dispositif de gestion du flux de fluide réfrigérant. Ce dispositif de gestion de flux de fluide réfrigérant permet notamment de définir, au niveau des différents points de jonctions, vers où le fluide réfrigérant circule.

Le dispositif de gestion de flux de fluide réfrigérant permet ainsi notamment pour ce premier mode de réalisation :
∘ la redirection du fluide réfrigérant en provenance du premier échangeur de chaleur 5 vers le premier dispositif de détente 7 et/ou vers le deuxième dispositif de détente 13,
∘ la redirection du fluide réfrigérant en provenance du deuxième dispositif de détente 13 vers la batterie thermique 11,
∘ la redirection du fluide réfrigérant en provenance du compresseur 3 vers la batterie thermique 11 ou vers le premier échangeur de chaleur 5,
∘ la redirection du fluide réfrigérant en provenance de la batterie thermique 11 vers le deuxième point de jonction 32 ou vers le quatrième point de jonction 34.

Plus particulièrement, le dispositif de gestion du flux de fluide réfrigérant peut comporter :
∘ une première vanne d'arrêt 41 disposée en amont du premier point de jonction 31, entre le cinquième point de jonction 35 et ledit premier point de jonction 31, dans le sens de circulation du fluide réfrigérant. Cette première vanne d'arrêt 41 peut ainsi être disposée entre le premier échangeur de chaleur 5 et le premier point de jonction 31, comme illustré sur la figure 1, ou encore entre le cinquième point de jonction 35 et le premier échangeur de chaleur 5. La fonction de cette première vanne d'arrêt 41 est d'empêcher ou de permettre le passage du fluide réfrigérant, en provenance du compresseur 3 ou du premier point de jonction31, dans le premier échangeur de chaleur 5,
∘ une deuxième vanne d'arrêt 42 disposée dans le circuit de stockage thermique A, entre le deuxième point de jonction 32 et le troisième point de jonction 33. La fonction de cette deuxième vanne d'arrêt 42 est d'empêcher ou de permettre le passage du fluide réfrigérant en provenance du deuxième point de jonction 32 vers le troisième point de jonction ou en provenance du troisième point de jonction 33 vers le deuxième point de jonction 32,
∘ une troisième vanne d'arrêt 43 disposée sur la branche de contournement A2 entre le cinquième point de jonction 35 et le sixième point de jonction 36. La fonction de cette troisième vanne d'arrêt 43 est d'empêcher ou de permettre le passage du fluide réfrigérant dans la branche de raccordement A2,
∘ un premier clapet anti-retour 51 disposé dans le sens de circulation du fluide réfrigérant, entre le premier point de jonction 31 et le sixième point de jonction 36, de sorte à ne laisser passer le fluide réfrigérant qu'en provenance dudit premier point de jonction 31. Le premier clapet anti-retour 51 peut être disposé, dans le sens de circulation du fluide réfrigérant, en aval du deuxième dispositif de détente 13, comme illustré sur la figure 1, ou bien en amont dudit deuxième dispositif de détente 13,
∘ un deuxième clapet anti-retour 52 disposé sur la branche de raccordement A1, de sorte à ne laisser passer le fluide réfrigérant qu'en provenance du troisième point de jonction 33, et
∘ un troisième clapet anti-retour 53 disposé dans le sens de circulation du fluide réfrigérant, entre le deuxième point de jonction 32 et le cinquième point de jonction 35, de sorte à ne laisser passer le fluide réfrigérant qu'en provenance du deuxième point de jonction 32. Le troisième clapet anti-retour 53 peut être disposé, dans le sens de circulation du fluide réfrigérant, en aval du compresseur 3, comme illustré sur la figure 1, ou bien en amont dudit compresseur 3.

De plus, les premier 7 et deuxième 13 dispositifs de détente peuvent être des dispositifs aptes à être fermés afin de bloquer le flux de fluide réfrigérant. Une solution alternative pour empêcher le fluide réfrigérant de traverser lesdits premier 7 et deuxième 13 dispositifs de détente peut être de disposer une vanne d'arrêt juste en amont desdits premier 7 et deuxième 13 dispositifs de détente.

Un tel dispositif de gestion du flux de fluide réfrigérant avec ses vannes et clapets anti-retour a l'avantage de pouvoir assurer ses fonctions de redirection et de sélection avec un minimum d'éléments tels que les vannes d'arrêt et les clapets anti-retour, qui sont peu onéreux.

Il est néanmoins tout à fait possible d'imaginer une autre composition pour le dispositif de gestion du flux de fluide réfrigérant qui permettrait d'assurer ses fonctions de redirection et de sélection, comme par exemple avec l'utilisation de vannes trois-voies positionnées au niveau des différents points de jonctions, une organisation différente des vannes d'arrêt et/ou des clapets anti-retour, ou encore une combinaison de ces différentes compositions de dispositif de gestion du flux de fluide réfrigérant.

Selon un deuxième mode de réalisation illustré à la figure 2, le compresseur électrique utilisé pour faire circuler le fluide réfrigérant entre la batterie thermique 11 et le deuxième échangeur de chaleur 9 lorsque que le moteur est à l'arrêt, est un compresseur électrique 301 dédié et disposé sur la branche de contournement A2. Ce compresseur électrique additionnel 301 est apte à faire circuler le fluide caloporteur depuis le cinquième point de jonction 35 vers le sixième point de jonction 36.

Dans ce deuxième mode de réalisation, le cinquième point de jonction 35 est disposé sur le circuit de stockage thermique A entre le deuxième point de jonction 32 et le troisième point de jonction 33.

Ce deuxième mode de réalisation est particulièrement adapté lorsque le compresseur 3 est un compresseur mécanique entraîné par le moteur du véhicule automobile. Le compresseur électrique additionnel 301 prend alors le relais afin de mettre en mouvement le fluide réfrigérant lorsque le moteur du véhicule est à l'arrêt.

Toujours selon ce deuxième mode de réalisation, la boucle de climatisation 1 peut comporter un dispositif de gestion du flux de fluide réfrigérant. Ce dispositif de gestion de flux de fluide réfrigérant permet notamment de définir au niveau des différents points de jonctions vers où le fluide réfrigérant circule.

Le dispositif de gestion de flux de fluide réfrigérant permet ainsi notamment pour ce deuxième mode de réalisation :
∘ la redirection du fluide réfrigérant en provenance du premier échangeur de chaleur 5 vers le premier dispositif de détente 7 et/ou vers le deuxième dispositif de détente 13,
∘ la redirection du fluide réfrigérant en provenance du deuxième dispositif de détente 13 vers la batterie thermique 11,
∘ la redirection du fluide réfrigérant en provenance du deuxième échangeur de chaleur 9 vers le compresseur 3 ou vers le compresseur électrique additionnel 301,
∘ la redirection du fluide réfrigérant en provenance de la batterie thermique 11 vers le deuxième point de jonction 32 ou vers le quatrième point de jonction 34.

Plus particulièrement, le dispositif de gestion du flux de fluide réfrigérant peut comporter :
∘ une première vanne d'arrêt 41 disposée en amont du premier point de jonction 31, entre le deuxième point de jonction 32 et ledit premier point de jonction 31, dans le sens de circulation du fluide réfrigérant. Cette première vanne d'arrêt 41 peut ainsi être disposée entre le premier échangeur de chaleur 5 et le premier point de jonction 31, comme illustré sur la figure 2, ou encore entre le deuxième de jonction 32 et le premier échangeur de chaleur 5, que ce soit en amont ou en aval du compresseur 3. La fonction de cette première vanne d'arrêt 41 est d'empêcher ou de permettre le passage du fluide réfrigérant, en provenance du compresseur 3 ou du premier point de jonction31, dans le premier échangeur de chaleur 5,
∘ une deuxième vanne d'arrêt 42 disposée sur le circuit de stockage thermique A entre le troisième point de jonction 33 et le cinquième point de jonction 35. La fonction de cette deuxième vanne d'arrêt 42 est d'empêcher ou de permettre le passage du fluide réfrigérant en provenance du cinquième point de jonction 35 vers le troisième point de jonction ou en provenance du troisième point de jonction 33 vers le cinquième point de jonction 35,
∘ une troisième vanne d'arrêt 43 disposée sur la branche de contournement A2 entre le cinquième point de jonction 35 et le sixième point de jonction 36. La troisième vanne d'arrêt 43 peut être disposée entre le compresseur électrique additionnel 301 et le sixième point de jonction 36, comme illustré à la figure 2, ou bien encore entre le cinquième point de jonction 35 et ledit compresseur électrique additionnel 301. La fonction de cette troisième vanne d'arrêt 43 est d'empêcher ou de permettre le passage du fluide réfrigérant dans la branche de raccordement A2,
∘ un premier clapet anti-retour 51 disposé dans le sens de circulation du fluide réfrigérant, entre le premier point de jonction 31 et le sixième point de jonction 36, de sorte à ne laisser passer le fluide réfrigérant qu'en provenance dudit premier point de jonction 31. Le premier clapet anti-retour 51 peut être disposé, dans le sens de circulation du fluide réfrigérant, en aval du deuxième dispositif de détente 13, comme illustré sur la figure 2, ou bien en amont dudit deuxième dispositif de détente 13,
∘ un deuxième clapet anti-retour 52 disposé sur la branche de raccordement A1, de sorte à ne laisser passer le fluide réfrigérant qu'en provenance du troisième point de jonction 33, et
∘ un quatrième clapet anti-retour 54 disposé sur la branche de contournement A2, dans le sens de circulation du fluide réfrigérant, en aval du cinquième point de jonction 35, entre ledit cinquième point de jonction 35 et le sixième point de jonction 36, de sorte à ne laisser passer le fluide réfrigérant qu'en provenance dudit cinquième point de jonction 35. Le quatrième clapet anti-retour 54 peut être disposé, dans le sens de circulation du fluide réfrigérant, en aval du compresseur électrique additionnel 301, comme illustré sur la figure 2, ou bien en amont dudit compresseur électrique additionnel 301.

De plus, les premier 7 et deuxième 13 dispositifs de détente peuvent être des dispositifs aptes à être fermés afin de bloquer le flux de fluide réfrigérant. Une solution alternative pour empêcher le fluide réfrigérant de traverser lesdits premier 7 et deuxième 13 dispositifs de détente peut être de disposer une vanne d'arrêt juste en amont desdits premier 7 et deuxième 13 dispositifs de détente.

Un tel dispositif de gestion du flux de fluide réfrigérant avec ses vannes et clapets anti-retour a l'avantage de pouvoir assurer ses fonctions de redirection et de sélection avec un minimum d'éléments tels que les vannes d'arrêt et les clapets anti-retour, qui sont peu onéreux.

Par vannes d'arrêts et clapets anti-retour, on entend ici des vannes d'arrêts ou clapets anti-retour mécaniques ou électroniques pouvant être pilotées par une unité de commande électronique embarquée dans le véhicule automobile.

Il est néanmoins tout à fait possible d'imaginer une autre composition pour le dispositif de gestion du flux de fluide réfrigérant qui permettrait d'assurer ses fonctions de redirection et de sélection, comme par exemple avec l'utilisation de vannes trois-voies positionnées au niveau des différents points de jonctions, une organisation différente des vannes d'arrêt et/ou des clapets anti-retour, ou encore une combinaison de ces différentes compositions de dispositif de gestion du flux de fluide réfrigérant.

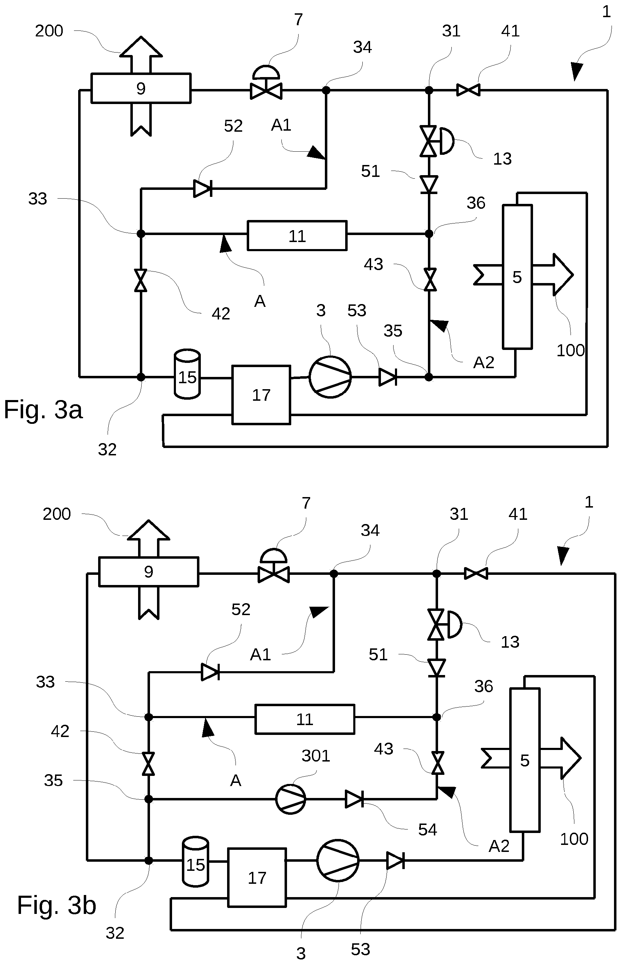

La boucle de climatisation 1 peut comporter un échangeur de chaleur interne 17 permettant un échange de chaleur entre le fluide réfrigérant en sortie du premier échangeur de chaleur 5 et le fluide réfrigérant en sortie du deuxième échangeur de chaleur 9. L'échangeur de chaleur interne 17 peut être présent aussi bien dans le premier mode de réalisation, comme illustré sur la figure 3a, ou bien dans le deuxième mode de réalisation, comme illustré sur la figure 3b.

Comme le montrent les figures 3a et 3b, l'échangeur de chaleur interne 17 comporte deux entrées et deux sorties de fluide réfrigérant. Une première entrée et une première sortie sont placées, dans le sens de circulation du fluide réfrigérant, en aval du premier échangeur de chaleur 5, entre ledit premier échangeur de chaleur 5 et le premier point de jonction 31, afin de faire circuler au sein de l'échangeur de chaleur interne 17 le fluide réfrigérant en provenance dudit premier échangeur de chaleur 5. Une deuxième entrée et une deuxième sortie peuvent être également placées en amont du compresseur 3, entre ledit compresseur 3 et le deuxième point de jonction 32, afin de faire circuler au sein de l'échangeur de chaleur interne 17 le fluide réfrigérant en provenance du deuxième échangeur de chaleur 9.

La boucle de climatisation 1 peut également comporter un accumulateur 15 disposé en amont du compresseur 3. Lorsque ladite boucle de climatisation 1 comporte un échangeur de chaleur interne 17, ledit accumulateur 15 est disposé en amont dudit échangeur de chaleur interne 17, comme illustré sur les figures 3a et 3b. Plus précisément, l'accumulateur 15 est disposé entre le deuxième point de jonction 32 et l'échangeur de chaleur interne 17.

Selon un autre mode de réalisation non représenté, le dispositif de climatisation 1 peut comporter, en remplacement de l'accumulateur 15, une bouteille dessicante pouvant être disposée en aval du premier échangeur de chaleur 5 ou bien intercalée au sein même dudit premier échangeur de chaleur 5. Cette bouteille dessicante permet notamment un sous refroidissement du fluide réfrigérant.

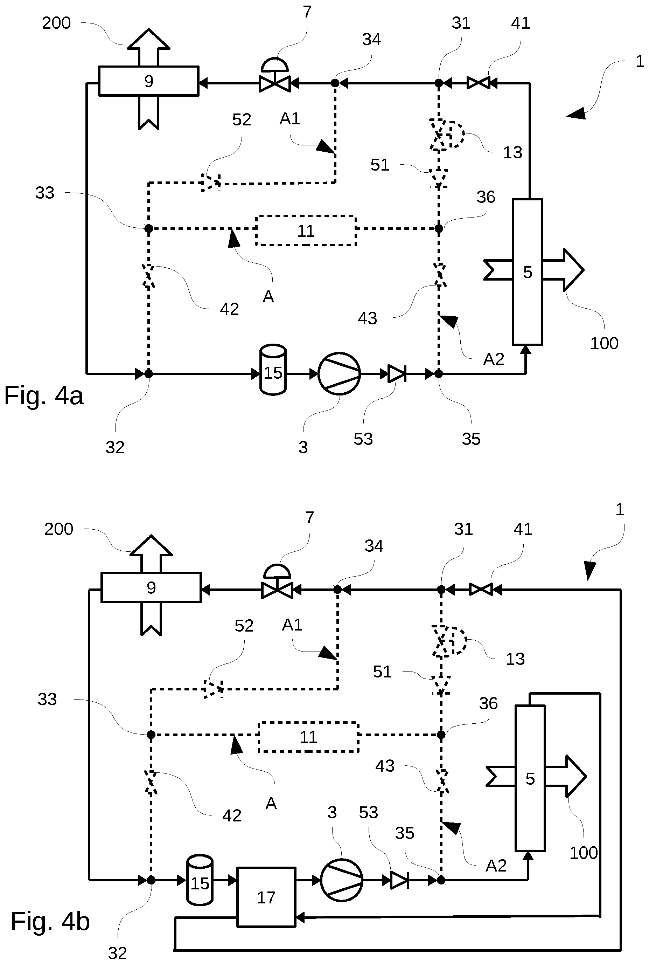

La présente invention concerne également un procédé de fonctionnement de la boucle de climatisation 1 selon différents modes de fonctionnement. Ces différents modes de fonctionnement sont illustrés aux figures 4a à 11b. Sur ces figures 4a à 11b, les éléments et conduites en trait plein correspondent aux éléments et conduites dans lesquels le fluide réfrigérant circule. Les éléments et conduites en trait pointillé correspondent quant à eux aux éléments et conduites dans lesquels le fluide réfrigérant ne circule pas.

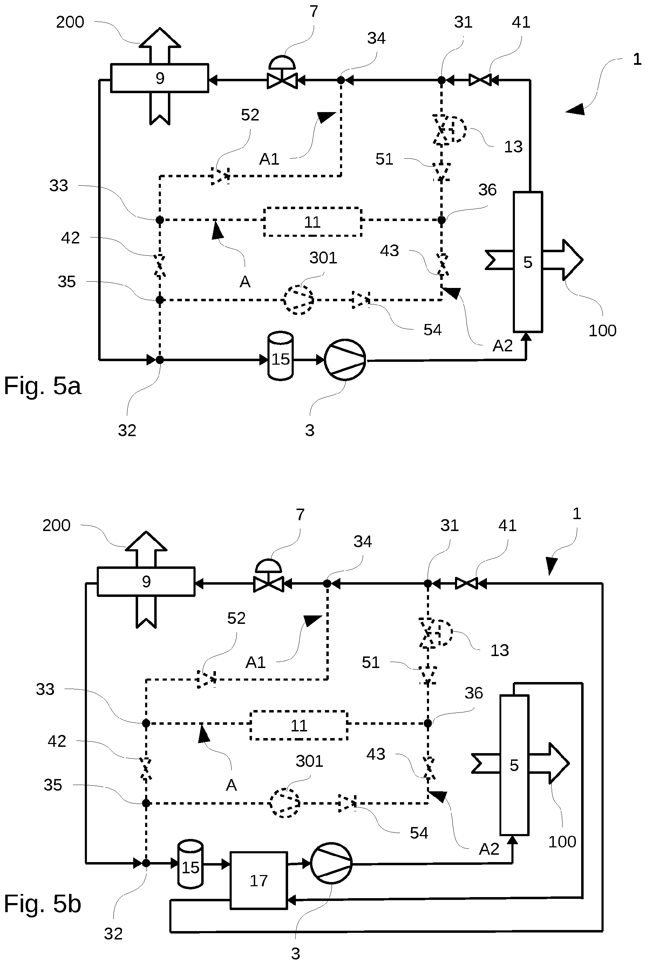

Comme le montrent les figures 4a et 4b pour le premier mode de réalisation sans et avec un échangeur de chaleur interne 17, ainsi que les figures 5a et 5b pour le deuxième mode de réalisation sans et avec un échangeur de chaleur interne 17, la boucle de climatisation 1 est apte à fonctionner selon un premier mode de fonctionnement dit mode climatisation.

Dans ce mode climatisation, le fluide réfrigérant circule successivement dans :
- le compresseur 3, où le fluide réfrigérant en phase gazeuse subit une augmentation de sa pression,
- le premier échangeur de chaleur 5, où le fluide réfrigérant perd de l'enthalpie en cédant de l'énergie calorifique au flux d'air extérieur 100 et où ledit fluide réfrigérant passe en phase liquide,
- le premier point de jonction 31 où le fluide réfrigérant est totalement redirigé vers le premier dispositif de détente 7, le fluide réfrigérant subissant une perte de pression au niveau dudit premier dispositif de détente 7,
- le deuxième échangeur de chaleur 9, où le fluide réfrigérant regagne de l'enthalpie en absorbant de l'énergie calorifique au flux d'air intérieur 200 et où ledit fluide réfrigérant passe en phase gazeuse, avant de rejoindre le compresseur 3.

Dans ce mode climatisation, le dispositif de gestion de flux de fluide réfrigérant redirige premièrement le fluide réfrigérant en provenance du premier échangeur de chaleur 5 vers le premier dispositif de détente 7, afin qu'il ne circule pas dans le circuit de stockage thermique A. Le dispositif de gestion de flux de fluide réfrigérant redirige ensuite le fluide réfrigérant en provenance du deuxième échangeur de chaleur 9 vers le compresseur 3.

Cela est par exemple possible en ouvrant la première vanne d'arrêt 41 et en fermant les deuxième 42 et troisième 43 vannes d'arrêts, ainsi qu'en empêchant le fluide réfrigérant de traverser le deuxième dispositif de détente 13.

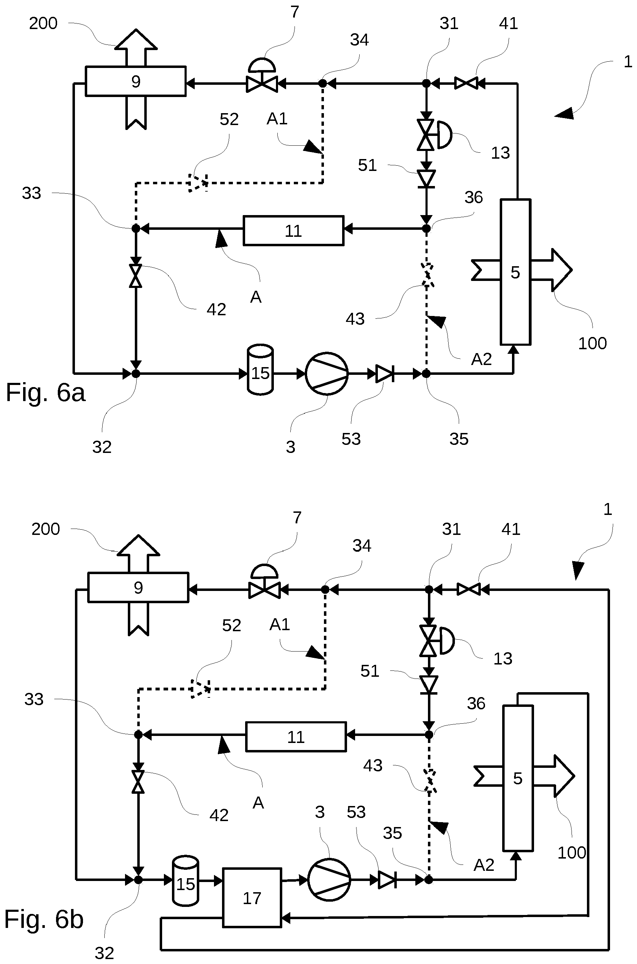

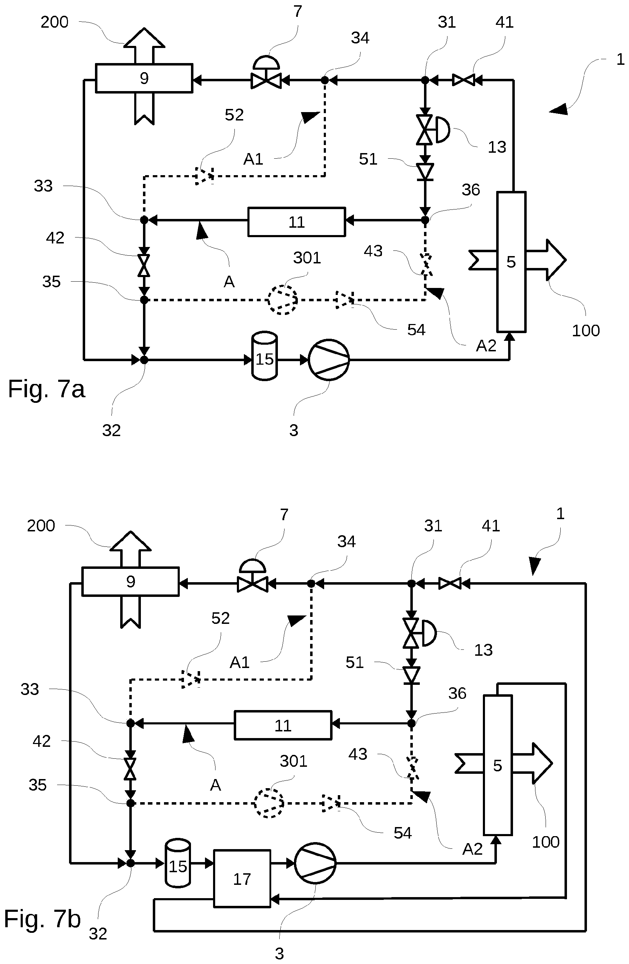

Comme le montrent les figures 6a et 6b pour le premier mode de réalisation sans et avec un échangeur de chaleur interne 17, ainsi que les figures 7a et 7b pour le deuxième mode de réalisation sans et avec un échangeur de chaleur interne 17, la boucle de climatisation 1 est apte à fonctionner selon un deuxième mode de fonctionnement dit mode de fonctionnement mixte.

Dans ce mode de fonctionnement mixte, le fluide réfrigérant passe successivement dans
- le compresseur 3, où le fluide réfrigérant en phase gazeuse subit une augmentation de sa pression,
- le premier échangeur de chaleur 5, où le fluide réfrigérant perd de l'enthalpie en cédant de l'énergie calorifique au flux d'air extérieur 100 et où ledit fluide réfrigérant passe en phase liquide,
- le premier point de jonction 31 où le flux de fluide réfrigérant se divise et où :
   ∘ une première portion du fluide réfrigérant passe par :
      ▪ le premier dispositif de détente 7, où le fluide réfrigérant subit une perte de pression,
      ▪ le deuxième échangeur de chaleur 9, où le fluide réfrigérant regagne de l'enthalpie en absorbant de l'énergie calorifique au flux d'air intérieur 200 et où ledit fluide réfrigérant passe en phase gazeuse, avant de rejoindre le le deuxième point de jonction 32,
   ° une deuxième portion du fluide réfrigérant passe par :
      ▪ le deuxième dispositif de détente 13, où le fluide réfrigérant subit une perte de pression,
      ▪ la batterie thermique 11 où le fluide réfrigérant regagne de l'enthalpie en absorbant de l'énergie calorifique afin de stocker du froid dans la batterie thermique 11, avant de rejoindre le deuxième point de jonction 32.

A partir du deuxième point de jonction 32, le fluide réfrigérant rejoint ensuite le compresseur 3.

Dans ce mode de fonctionnement mixte, le dispositif de gestion du flux de fluide réfrigérant redirige premièrement le fluide réfrigérant en provenance du premier échangeur de chaleur 5 vers le premier dispositif de détente 7 et vers le deuxième dispositif de détente 13. Le dispositif de gestion du flux de fluide réfrigérant redirige ensuite :
- le fluide réfrigérant en provenance du deuxième dispositif de détente 13 vers la batterie thermique 11,
- le fluide réfrigérant en provenance de la batterie thermique 11 vers le deuxième point de jonction 32, et
- le fluide réfrigérant en provenance du deuxième échangeur de chaleur 9 et de la batterie thermique 11 vers le compresseur 3.

Cela est par exemple possible en ouvrant les première 41 et deuxième 42 vannes d'arrêt et en fermant la troisième 43 vanne d'arrêt.

Dans ce mode de fonctionnement mixte, la boucle de climatisation 1 permet simultanément un refroidissement du flux d'air intérieur 200 et un stockage de froid dans la batterie thermique 11.

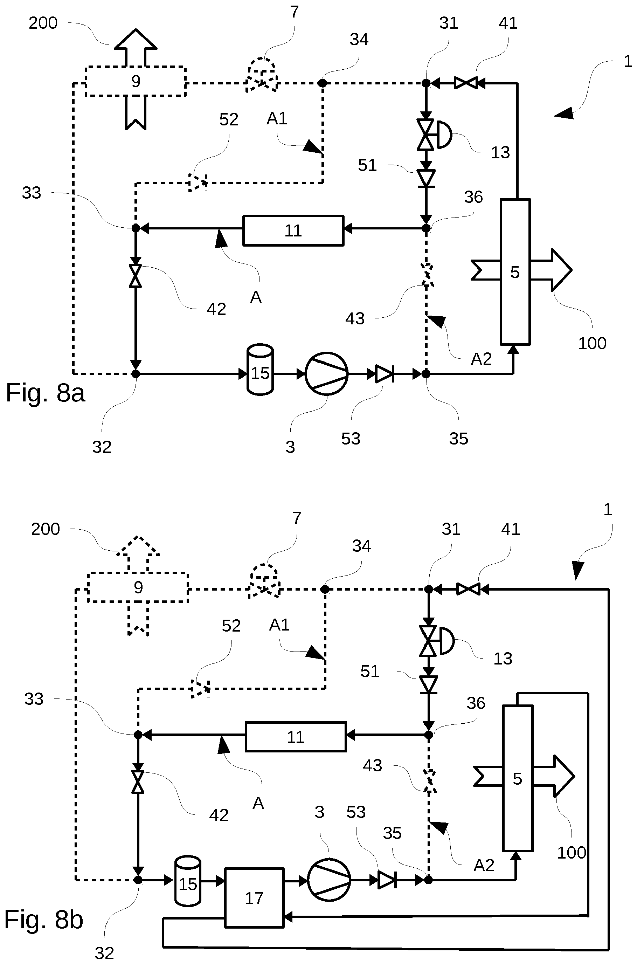

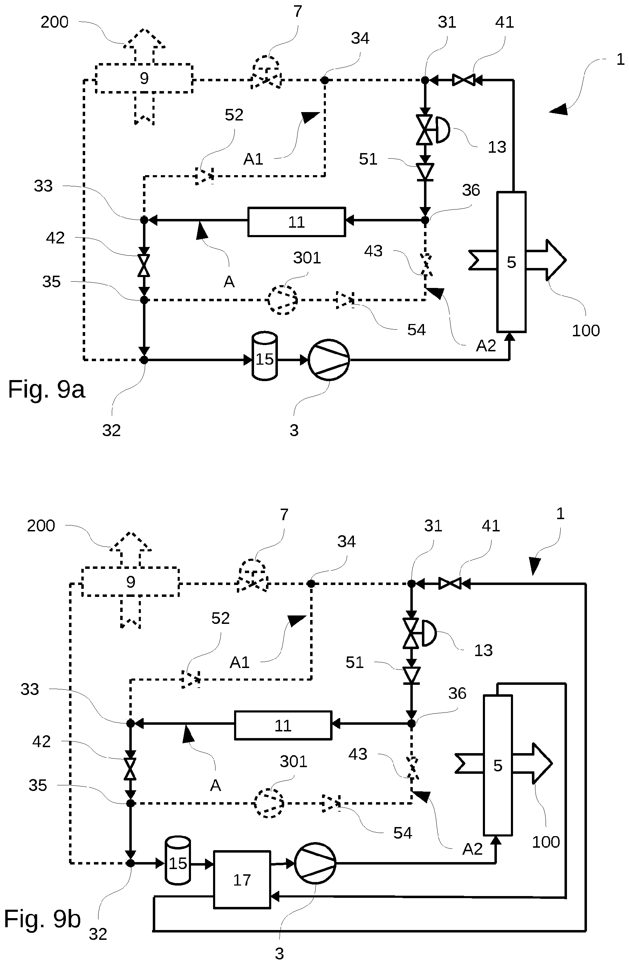

Il est cependant tout à fait possible d'imaginer un troisième mode de fonctionnement dit mode de stockage de froid, où la boucle de climatisation 1 fonctionnerait uniquement pour stocker du froid dans la batterie thermique 11. Ce mode de stockage de froid est illustré aux figures 8a et 8b pour le premier mode de réalisation sans et avec un échangeur de chaleur interne 17, ainsi qu'aux figures 9a et 9b pour le deuxième mode de réalisation sans et avec un échangeur de chaleur interne 17,

Dans ce mode de stockage de froid, le fluide réfrigérant passe successivement dans
- le compresseur 3, où le fluide réfrigérant en phase gazeuse subit une augmentation de sa pression,
- le premier échangeur de chaleur 5, où le fluide réfrigérant perd de l'enthalpie en cédant de l'énergie calorifique au flux d'air extérieur 100 et où ledit fluide réfrigérant passe en liquide,
- le deuxième dispositif de détente 13, où le fluide réfrigérant subit une perte de pression,
- la batterie thermique 11 où le fluide réfrigérant regagne de l'enthalpie en absorbant de l'énergie calorifique afin de stocker du froid dans la batterie thermique 11 et ainsi repasser en phase gazeuse, avant de rejoindre le compresseur 3.

Dans ce mode de fonctionnement de stockage de froid, le dispositif de gestion du flux de fluide réfrigérant redirige premièrement le fluide réfrigérant en provenance du premier échangeur de chaleur 5 uniquement vers deuxième dispositif de détente 13. Le dispositif de gestion du flux de fluide réfrigérant redirige ensuite :
- le fluide réfrigérant en provenance du deuxième dispositif de détente 13 vers la batterie thermique 11,
- le fluide réfrigérant en provenance de la batterie thermique 11 vers le compresseur 3.

Cela est par exemple possible en ouvrant les première 41 et deuxième 42 vannes d'arrêt, en fermant la troisième 43 vanne d'arrêt ainsi qu'en empêchant au fluide réfrigérant de traverser le premier dispositif de détente 7.

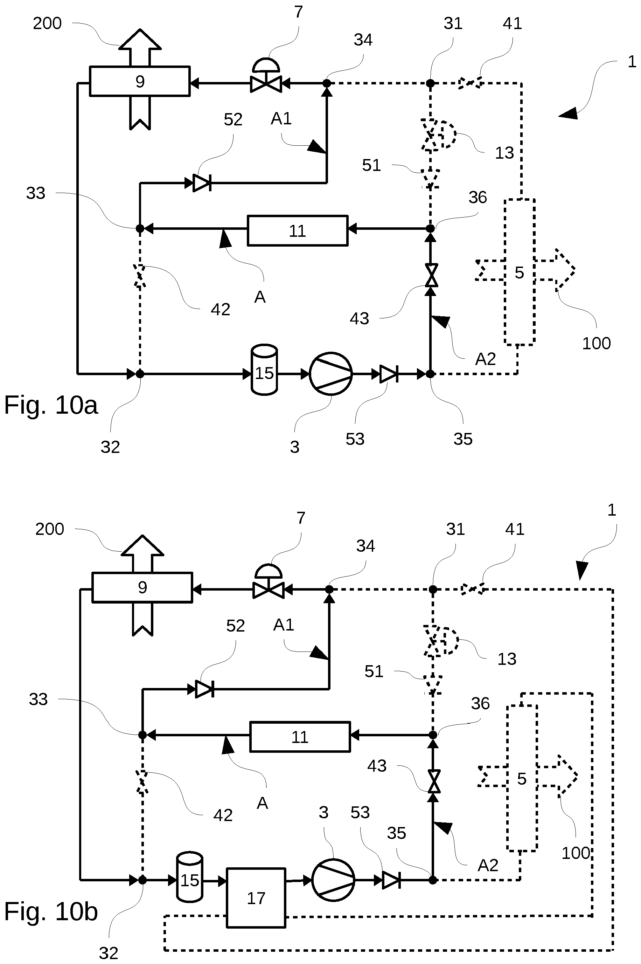

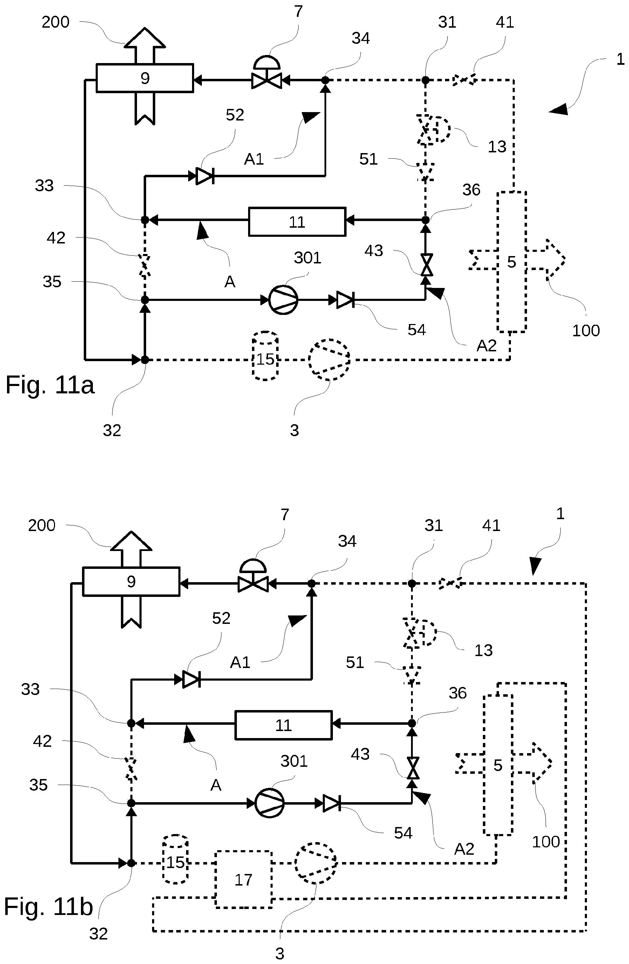

Comme le montrent les figures 10a et 10b pour le premier mode de réalisation sans et avec un échangeur de chaleur interne 17, ainsi que les figures 11a et 11b pour le deuxième mode de réalisation sans et avec un échangeur de chaleur interne 17, la boucle de climatisation 1 est apte à fonctionner selon un quatrième mode de fonctionnement dit mode de restitution d'énergie calorifique.

Dans ce mode de restitution d'énergie calorifique, le fluide réfrigérant passe successivement dans :
- la branche de contournement A2. Pour le premier mode de réalisation le fluide réfrigérant passe au préalable dans le compresseur 3 afin d'être comprimé et pour le deuxième mode de réalisation le fluide réfrigérant passe au sein de la branche de contournement A2 dans le compresseur électrique additionnel 301 afin d'être comprimé,
- la batterie thermique 11, où le fluide réfrigérant cède de l'énergie calorifique afin de se refroidir et passe en phase liquide,
- la branche de raccordement A1,
- le premier dispositif de détente 7, où le fluide réfrigérant subit une perte de pression,
- le deuxième échangeur de chaleur 9, où le fluide réfrigérant regagne de l'enthalpie en absorbant de l'énergie calorifique au flux d'air intérieur 200 et où ledit fluide réfrigérant passe en phase gazeuse, et retourne vers la branche de contournement A2 en passant par le compresseur 3 pour le premier mode de réalisation et par le compresseur électrique additionnel 301 pour le deuxième mode de réalisation.

Ce mode de restitution d'énergie calorifique est notamment celui utilisé pour maintenir un niveau de confort à l'intérieur de l'habitacle du véhicule lorsque le moteur est à l'arrêt. Avec ce mode de restitution d'énergie calorifique, il est possible de continuer de refroidir le flux d'air intérieur 200 en absorbant son énergie calorifique et en la transférant à la batterie thermique 11. Ladite batterie thermique 11 fait alors office de source de froid afin de refroidir le flux d'air intérieur 200.

Dans ce mode de restitution d'énergie calorifique et selon le premier mode de réalisation, comme illustré aux figures 10a et 10b, après avoir traversé le deuxième échangeur de chaleur 9 et avant de passer par la branche de contournement A2, le fluide réfrigérant passe par le compresseur 3 où il subit une augmentation de pression.

Toujours selon le premier mode de réalisation pour ce mode de restitution d'énergie calorifique, le dispositif de gestion du flux de fluide réfrigérant redirige premièrement le fluide réfrigérant en provenance du compresseur 3 au niveau du cinquième point de jonction 35 vers la batterie thermique 11. Le dispositif de gestion du flux de fluide réfrigérant redirige ensuite :
- le fluide réfrigérant en provenance de la batterie thermique 11 vers le premier dispositif de détente 7 en passant par la branche de raccordement A1, et
- le fluide réfrigérant en provenance du deuxième échangeur de chaleur 9 vers le compresseur 3.

Cela est par exemple possible en ouvrant la troisième vanne d'arrêt 43, en fermant les deuxième 42 et première 41 vannes d'arrêt ainsi qu'en empêchant au fluide réfrigérant de traverser le deuxième dispositif de détente 13.

Dans ce mode de restitution d'énergie calorifique et selon le deuxième mode de réalisation, comme illustré aux figures 11a et 11b, après avoir traversé le deuxième échangeur de chaleur 9 le fluide réfrigérant passe le deuxième point de jonction 32 où il est redirigé totalement vers le cinquième point de jonction 35 afin de passer dans la branche de contournement A2. Au sein de ladite branche de contournement A2, le fluide réfrigérant passe par le compresseur électrique additionnel 301 où il subit une augmentation de pression.

Toujours selon le deuxième mode de réalisation pour ce mode de restitution d'énergie calorifique, le dispositif de gestion du flux de fluide réfrigérant redirige premièrement le fluide réfrigérant en provenance du compresseur électrique additionnel 301 vers la batterie thermique 11. Le dispositif de gestion du flux de fluide réfrigérant redirige ensuite :
- le fluide réfrigérant en provenance de la batterie thermique 11 vers le premier dispositif de détente 7 en passant par la branche de raccordement A1, et
- le fluide réfrigérant en provenance du deuxième échangeur de chaleur 9 vers le cinquième point de jonction 35 et la branche de contournement A2.

Cela est par exemple possible en ouvrant la troisième vanne d'arrêt 43, en fermant les deuxième 42 et première 41 vannes d'arrêt ainsi qu'en empêchant au fluide réfrigérant de traverser le deuxième dispositif de détente 13.

Ainsi, on voit bien que la boucle de climatisation selon l'invention, de par son architecture et ces modes de fonctionnements, permet de s'affranchir de l'utilisation d'une pompe électrique qui ne peut fonctionner qu'avec un fluide réfrigérant en phase liquide afin de continuer à fournir de l'air refroidi à l'habitacle et ce même si le moteur du véhicule est à l'arrêt.

## Revendications

1. Boucle de climatisation (1) pour véhicule automobile dans laquelle circule un fluide réfrigérant et comportant dans le sens de circulation du fluide réfrigérant :
∘ un compresseur (3),
∘ un premier échangeur de chaleur (5) disposé en aval du compresseur (3),
∘ un premier dispositif de détente (7) disposé en aval du premier échangeur de chaleur (5),
∘ un deuxième échangeur de chaleur (9) disposé en aval du premier dispositif de détente (7),
ladite boucle de climatisation (1) comportant en outre un circuit de stockage thermique (A) reliant un premier point de jonction (31) disposé en aval du premier échangeur de chaleur (5), entre ledit premier échangeur de chaleur (5) et le dispositif de détente (7), et un deuxième point de jonction (32) disposé en amont du compresseur (3), entre le deuxième échangeur de chaleur (9) et ledit compresseur (3),
ledit circuit de stockage thermique (A) comportant :
∘ un deuxième dispositif de détente (13) disposé en aval du premier point de jonction (31),
∘ une batterie thermique (11) disposée en aval du deuxième dispositif de détente (13), et
∘ une branche de contournement (A2) du premier échangeur de chaleur (5) reliant un cinquième point de jonction (35), disposé en amont du premier échangeur de chaleur (5) et un sixième point de jonction (36), disposé entre le deuxième dispositif de détente (13) et la batterie thermique (11),
**caractérisé en ce que** le circuit de stockage thermique (A) comporte en outre une branche de raccordement (A1) reliant un troisième point de jonction (33), disposé entre la batterie thermique (11) et le deuxième point de jonction (32) et un quatrième point de jonction (34), disposé entre le premier point de jonction (31) et le premier dispositif de détente (7).

2. Boucle de climatisation (1) selon la revendication 1, **caractérisée en ce qu'**elle comporte un échangeur de chaleur interne (17) permettant un échange de chaleur entre le fluide réfrigérant en sortie du premier échangeur de chaleur (5) et le fluide réfrigérant en sortie du deuxième échangeur de chaleur (9).

3. Boucle de climatisation (1) selon l'une des revendications précédentes, **caractérisée en ce que** le compresseur (3) est un compresseur électrique et que le cinquième point de jonction (35) est disposé en aval du compresseur (3), entre ledit compresseur (3) et le premier échangeur de chaleur (5).

4. Boucle de climatisation (1) selon la revendication précédente, **caractérisée en ce que** le compresseur (3) est un compresseur électrique apte à fonctionner avec un taux de compression inférieur ou égal à 1,5, de préférence inférieur ou égal à 1,3.

5. Boucle de climatisation (1) selon l'une des revendications 3 ou 4, **caractérisée en ce qu'**elle comporte un dispositif de gestion du flux de fluide réfrigérant de sorte à permettre :
∘ la redirection du fluide réfrigérant en provenance du premier échangeur de chaleur (5) vers le premier dispositif de détente (7) et/ou vers le deuxième dispositif de détente (13),
∘ la redirection du fluide réfrigérant en provenance du deuxième dispositif de détente (13) vers la batterie thermique (11),
∘ la redirection du fluide réfrigérant en provenance du compresseur (3) vers la batterie thermique (11) ou vers le premier échangeur de chaleur (5),
∘ la redirection du fluide réfrigérant en provenance de la batterie thermique (11) vers le deuxième point de jonction (32) ou vers le quatrième point de jonction (34).

6. Boucle de climatisation (1) selon la revendication précédente, **caractérisée en ce que** le dispositif de gestion du flux de fluide réfrigérant comporte :
∘ une première vanne d'arrêt (41) disposée dans le sens de circulation du fluide réfrigérant, en amont du premier point de jonction (31), entre le cinquième point de jonction (35) et ledit premier point de jonction (31),
∘ une deuxième vanne d'arrêt (42) disposée sur le circuit de stockage thermique (A), entre le deuxième point de jonction (32) et le troisième point de jonction (33),
∘ une troisième vanne d'arrêt (43) disposée sur la branche de contournement (A2) entre le cinquième point de jonction (35) et le sixième point de jonction (36),
∘ un premier clapet anti-retour (51) disposé dans le sens de circulation du fluide réfrigérant, entre le premier point de jonction (31) et le sixième point de jonction (36) de sorte à ne laisser passer le fluide réfrigérant qu'en provenance dudit premier point de jonction (31),
∘ un deuxième clapet anti-retour (52) disposé sur la branche de raccordement (A1), de sorte à ne laisser passer le fluide réfrigérant qu'en provenance du troisième point de jonction (33), et
∘ un troisième clapet anti-retour (53) disposé dans le sens de circulation du fluide réfrigérant, entre le deuxième point de jonction (32) et le cinquième point de jonction (35) de sorte à ne laisser passer le fluide réfrigérant qu'en provenance du deuxième point de jonction (32).

7. Boucle de climatisation (1) selon l'une des revendications 1 ou 2, **caractérisée en ce que** le cinquième point de jonction (35) est disposé sur le circuit de stockage thermique (A) entre le deuxième point de jonction (32) et le troisième point de jonction (33) et que la branche de contournement (A2) comporte un compresseur électrique additionnel (301) apte à faire circuler le fluide caloporteur depuis le cinquième point de jonction (35) vers le sixième point de jonction (36).

8. Boucle de climatisation (1) selon la revendication précédente, **caractérisée en ce que** le compresseur électrique additionnel (301) est apte à fonctionner avec un taux de compression inférieur ou égal à 1,5, de préférence inférieur ou égal à 1,3.

9. Boucle de climatisation (1) selon l'une des revendication 7ou 8, **caractérisée en ce qu'**elle comporte un dispositif de gestion du flux de fluide réfrigérant de sorte à permettre :
° la redirection du fluide réfrigérant en provenance du premier échangeur de chaleur (5) vers le premier dispositif de détente (7) et/ou vers le deuxième dispositif de détente (13),
∘ la redirection du fluide réfrigérant en provenance du deuxième dispositif de détente (13) vers la batterie thermique (11),
∘ la redirection du fluide réfrigérant en provenance du deuxième échangeur de chaleur (9) vers le compresseur (3) ou vers le compresseur électrique additionnel (301),
∘ la redirection du fluide réfrigérant en provenance de la batterie thermique (11) vers le deuxième point de jonction (32) ou vers le quatrième point de jonction (34).

10. Boucle de climatisation (1) selon la revendication précédente, **caractérisée en ce que** le dispositif de gestion du flux de fluide réfrigérant comporte :
∘ une première vanne d'arrêt (41) disposée dans le sens de circulation du fluide réfrigérant, en amont du premier point de jonction (31), entre le deuxième point de jonction (32) et ledit premier point de jonction (31),
∘ une deuxième vanne d'arrêt (42) disposée sur le circuit de stockage thermique (A) entre le troisième point de jonction (33) et le cinquième point de jonction (35),
∘ une troisième vanne d'arrêt (43) disposée sur la branche de contournement (A2) entre le cinquième point de jonction (35) et le sixième point de jonction (36),
∘ un premier clapet anti-retour (51) disposé dans le sens de circulation du fluide réfrigérant, entre le premier point de jonction (31) et le sixième point de jonction (36) de sorte à ne laisser passer le fluide réfrigérant qu'en provenance dudit premier point de jonction (31),
∘ un deuxième clapet anti-retour (52) disposé sur la branche de raccordement (A1), de sorte à ne laisser passer le fluide réfrigérant qu'en provenance du troisième point de jonction (33), et
∘ un quatrième clapet anti-retour (54) disposé sur la branche de contournement (A2), dans le sens de circulation du fluide réfrigérant, en aval cinquième point de jonction (35), entre ledit cinquième point de jonction (35) et le sixième point de jonction (36) de sorte à ne laisser passer le fluide réfrigérant qu'en provenance dudit cinquième point de jonction (35).

11. Procédé de fonctionnement d'une boucle de climatisation (1) selon l'une des revendications 1 à 10, selon un mode de fonctionnement mixte, dans lequel le fluide réfrigérant passe successivement dans le compresseur (3), le premier échangeur de chaleur (5), le premier point de jonction (31) où le flux de fluide réfrigérant se divise et où :
∘ une première portion du fluide réfrigérant passe par le premier dispositif de détente (7), le deuxième échangeur de chaleur (9) et rejoint le deuxième point de jonction (32),
∘ une deuxième portion du fluide réfrigérant passe par le deuxième dispositif de détente (13), la batterie thermique (11) et rejoint le deuxième point de jonction (32), depuis le deuxième point de jonction (32), le fluide réfrigérant rejoint ensuite le compresseur (3).

12. Procédé fonctionnement d'une boucle de climatisation (1) selon l'une des revendications 1 à 10, selon un mode de stockage de froid, dans lequel le fluide réfrigérant passe successivement dans le compresseur (3), le premier échangeur de chaleur (5), le premier point de jonction (31) où le fluide réfrigérant est totalement redirigé vers le deuxième dispositif de détente (13), le fluide réfrigérant passant ensuite dans la batterie thermique (11) et rejoignant ensuite le compresseur (3).

13. Procédé de fonctionnement selon une boucle de climatisation (1) selon l'une des revendications 1 à 10, selon un mode de fonctionnement de restitution d'énergie calorifique, dans lequel le fluide réfrigérant en provenance de la branche de contournement (A2) passe successivement dans la batterie thermique (11), la branche de raccordement (A1), le premier dispositif de détente (7), le deuxième échangeur de chaleur (9) et retourne à la branche de contournement (A2).

## Patentansprüche

1. Klimatisierungskreis (1) für ein Kraftfahrzeug, in dem ein Kühlmittel strömt und der in der Strömungsrichtung des Kühlmittels aufweist:
∘ einen Kompressor (3),
∘ einen stromabwärts hinter dem Kompressor (3) angeordneten ersten Wärmetauscher (5),
∘ eine stromabwärts hinter dem ersten Wärmetauscher (5) angeordnete erste Expansionsvorrichtung (7), und
∘ einen stromabwärts hinter der ersten Expansionsvorrichtung (7) angeordneten zweiten Wärmetauscher (9),
wobei der Klimatisierungskreis (1) außerdem einen Wärmespeicherkreis (A) aufweist, der einen ersten Verbindungspunkt (31), der stromabwärts hinter dem ersten Wärmetauscher (5) zwischen dem ersten Wärmetauscher (5) und der Expansionsvorrichtung (7) angeordnet ist, und einen zweiten Verbindungspunkt (32) verbindet, der stromaufwärts vor dem Kompressor (3) zwischen dem zweiten Wärmetauscher (9) und dem Kompressor (3) angeordnet ist,
wobei der Wärmespeicherkreis (A) aufweist:
∘ eine stromabwärts hinter dem ersten Verbindungspunkt (31) angeordnete zweite Expansionsvorrichtung (13),
∘ eine stromabwärts hinter der zweiten Expansionsvorrichtung (13) angeordnete Thermobatterie (11),
∘ einen Umgehungszweig (A2) des ersten Wärmetauschers (5), der einen fünften Verbindungspunkt (35), der stromaufwärts vor dem ersten Wärmetauscher (5) angeordnet ist, und einen sechsten Verbindungspunkt (36) verbindet, der zwischen der zweiten Expansionsvorrichtung (13) und der Thermobatterie (11) angeordnet ist,
**dadurch gekennzeichnet, dass** der Wärmespeicherkreis (A) außerdem einen Anschlusszweig (A1) aufweist, der einen dritten Verbindungspunkt (33), der zwischen der Thermobatterie (11) und dem zweiten Verbindungspunkt (32) angeordnet ist, und einen vierten Verbindungspunkt (34) verbindet, der zwischen dem ersten Verbindungspunkt (31) und der ersten Expansionsvorrichtung (7) angeordnet ist.

2. Klimatisierungskreis (1) nach Anspruch 1, **dadurch gekennzeichnet, dass** er einen inneren Wärmetauscher (17) aufweist, der einen Wärmeaustausch zwischen dem Kühlmittel am Ausgang des ersten Wärmetauschers (5) und dem Kühlmittel am Ausgang des zweiten Wärmetauschers (9) erlaubt.

3. Klimatisierungskreis (1) nach einem der vorhergehenden Ansprüche, **dadurch gekennzeichnet, dass** der Kompressor (3) ein elektrischer Kompressor ist, und dass der fünfte Verbindungspunkt (35) stromabwärts hinter dem Kompressor (3) zwischen dem Kompressor (3) und dem ersten Wärmetauscher (5) angeordnet ist.

4. Klimatisierungskreis (1) nach dem vorhergehenden Anspruch, **dadurch gekennzeichnet, dass** der Kompressor (3) ein elektrischer Kompressor ist, der mit einem Verdichtungsverhältnis niedriger als oder gleich 1,5, vorzugsweise niedriger als oder gleich 1,3 arbeiten kann.

5. Klimatisierungskreis (1) nach einem der Ansprüche 3 oder 4, **dadurch gekennzeichnet, dass** er eine Verwaltungsvorrichtung des Kühlmittelstroms aufweist, um zu ermöglichen:
∘ die Umleitung des vom ersten Wärmetauscher (5) kommenden Kühlmittels zur ersten Expansionsvorrichtung (7) und/oder zur zweiten Expansionsvorrichtung (13),
∘ die Umleitung des von der zweiten Expansionsvorrichtung (13) kommenden Kühlmittels zur Thermobatterie (11),
∘ die Umleitung des vom Kompressor (3) kommenden Kühlmittels zur Thermobatterie (11) oder zum ersten Wärmetauscher (5),
∘ die Umleitung des von der Thermobatterie (11) kommenden Kühlmittels zum zweiten Verbindungspunkt (32) oder zum vierten Verbindungspunkt (34).

6. Klimatisierungskreis (1) nach dem vorhergehenden Anspruch, **dadurch gekennzeichnet, dass** die Verwaltungsvorrichtung des Kühlmittelstroms aufweist:
∘ einen ersten Absperrschieber (41), der in Strömungsrichtung des Kühlmittels stromaufwärts vor dem ersten Verbindungspunkt (31) zwischen dem fünften Verbindungspunkt (35) und dem ersten Verbindungspunkt (31) angeordnet ist,
∘ einen zweiten Absperrschieber (42), der auf dem Wärmespeicherkreis (A) zwischen dem zweiten Verbindungspunkt (32) und dem dritten Verbindungspunkt (33) angeordnet ist,
∘ einen dritten Absperrschieber (43), der auf dem Umgehungszweig (A2) zwischen dem fünften Verbindungspunkt (35) und dem sechsten Verbindungspunkt (36) angeordnet ist,
∘ ein erstes Rückschlagventil (51), das in der Strömungsrichtung des Kühlmittels zwischen dem ersten Verbindungspunkt (31) und dem sechsten Verbindungspunkt (36) angeordnet ist, um nur das vom ersten Verbindungspunkt (31) kommende Kühlmittel durchzulassen,
∘ ein zweites Rückschlagventil (52), das auf dem Anschlusszweig (A1) angeordnet ist, um nur das vom dritten Verbindungspunkt (33) kommende Kühlmittel durchzulassen, und
∘ ein drittes Rückschlagventil (53), das in der Strömungsrichtung des Kühlmittels zwischen dem zweiten Verbindungspunkt (32) und dem fünften Verbindungspunkt (35) angeordnet ist, um nur das vom zweiten Verbindungspunkt (32) kommende Kühlmittel durchzulassen.

7. Klimatisierungskreis (1) nach einem der Ansprüche 1 oder 2, **dadurch gekennzeichnet, dass** der fünfte Verbindungspunkt (35) auf dem Wärmespeicherkreis (A) zwischen dem zweiten Verbindungspunkt (32) und dem dritten Verbindungspunkt (33) angeordnet ist, und dass der Umgehungszweig (A2) einen zusätzlichen elektrischen Kompressor (301) aufweist, der das Wärmeträgerfluid vom fünften Verbindungspunkt (35) zum sechsten Verbindungspunkt (36) strömen lassen kann.

8. Klimatisierungskreis (1) nach dem vorhergehenden Anspruch, **dadurch gekennzeichnet, dass** der zusätzliche elektrische Kompressor (301) mit einem Verdichtungsverhältnis niedriger als oder gleich 1,5, vorzugsweise niedriger als oder gleich 1,3 arbeiten kann.

9. Klimatisierungskreis (1) nach einem der Ansprüche 7 oder 8, **dadurch gekennzeichnet, dass** er eine Verwaltungsvorrichtung des Kühlmittelstroms aufweist, um zu ermöglichen:
∘ die Umleitung des vom ersten Wärmetauscher (5) kommenden Kühlmittels zur ersten Expansionsvorrichtung (7) und/oder zur zweiten Expansionsvorrichtung (13),
∘ die Umleitung des von der zweiten Expansionsvorrichtung (13) kommenden Kühlmittels zur Thermobatterie (11),
∘ die Umleitung des vom zweiten Wärmetauscher (9) kommenden Kühlmittels zum Kompressor (3) oder zum zusätzlichen elektrischen Kompressor (301),
∘ die Umleitung des von der Thermobatterie (11) kommenden Kühlmittels zum zweiten Verbindungspunkt (32) oder zum vierten Verbindungspunkt (34).

10. Klimatisierungskreis (1) nach dem vorhergehenden Anspruch, **dadurch gekennzeichnet, dass** die Verwaltungsvorrichtung des Kühlmittelstroms aufweist:
∘ einen ersten Absperrschieber (41), der in der Strömungsrichtung des Kühlmittels stromaufwärts vor dem ersten Verbindungspunkt (31) zwischen dem zweiten Verbindungspunkt (32) und dem ersten Verbindungspunkt (31) angeordnet ist,
∘ einen zweiten Absperrschieber (42), der auf dem Wärmespeicherkreis (A) zwischen dem dritten Verbindungspunkt (33) und dem fünften Verbindungspunkt (35) angeordnet ist,
∘ einen dritten Absperrschieber (43), der auf dem Umgehungszweig (A2) zwischen dem fünften Verbindungspunkt (35) und dem sechsten Verbindungspunkt (36) angeordnet ist,
∘ ein erstes Rückschlagventil (51), das in der Strömungsrichtung des Kühlmittels zwischen dem ersten Verbindungspunkt (31) und dem sechsten Verbindungspunkt (36) angeordnet ist, um nur das vom ersten Verbindungspunkt (31) kommende Kühlmittel durchzulassen,
∘ ein zweites Rückschlagventil (52), das auf dem Anschlusszweig (A1) angeordnet ist, um nur das vom dritten Verbindungspunkt (33) kommende Kühlmittel durchzulassen, und
∘ ein viertes Rückschlagventil (54), das in der Strömungsrichtung des Kühlmittels stromabwärts hinter dem fünften Verbindungspunkt (35) zwischen dem fünften Verbindungspunkt (35) und dem sechsten Verbindungspunkt (36) auf dem Umgehungszweig (A2) angeordnet ist, um nur das vom fünften Verbindungspunkt (35) kommende Kühlmittel durchzulassen.

11. Betriebsverfahren eines Klimatisierungskreises (1) nach einem der Ansprüche 1 bis 10 gemäß einer gemischten Betriebsart, bei dem das Kühlmittel nacheinander in den Kompressor (3), den ersten Wärmetauscher (5), den ersten Verbindungspunkt (31) geht, wo der Kühlmittelstrom sich teilt und wo:
∘ ein erster Teil des Kühlmittels durch die erste Expansionsvorrichtung (7), den zweiten Wärmetauscher (9) geht und zum zweiten Verbindungspunkt (32) gelangt,
∘ ein zweiter Teil des Kühlmittels durch die zweite Expansionsvorrichtung (13), die Thermobatterie (11) geht und zum zweiten Verbindungspunkt (32) gelangt, vom zweiten Verbindungspunkt (32) das Kühlmittel anschließend zum Kompressor (3) gelangt.

12. Betriebsverfahren eines Klimatisierungskreises (1) nach einem der Ansprüche 1 bis 10 gemäß einem Kaltspeichermodus, bei dem das Kühlmittel nacheinander in den Kompressor (3), den ersten Wärmetauscher (5), den ersten Verbindungspunkt (31) geht, wo das Kühlmittel vollständig zur zweiten Expansionsvorrichtung (13) umgeleitet wird, wobei das Kühlmittel anschließend in die Thermobatterie (11) geht und dann zum Kompressor (3) gelangt.

13. Betriebsverfahren gemäß einem Klimatisierungskreis (1) nach einem der Ansprüche 1 bis 10 gemäß einer Betriebsart der Wiedergewinnung von Wärmeenergie, wobei das vom Umgehungszweig (A2) kommende Kühlmittel nacheinander in die Thermobatterie (11), den Anschlusszweig (A1), die erste Expansionsvorrichtung (7), den zweiten Wärmetauscher (9) geht und zum Umgehungszweig (A2) zurückkehrt.

## Claims

1. Motor vehicle air conditioning loop (1) in which a refrigerant fluid flows, and comprising, in the direction of flow of the refrigerant fluid:
• a compressor (3),
• a first heat exchanger (5) arranged downstream of the compressor (3),
• a first expansion device (7) arranged downstream of the first heat exchanger (5), and
• a second heat exchanger (9) arranged downstream of the first expansion device (7),
the said air conditioning loop (1) further comprising a heat storage circuit (A) connecting a first junction point (31) arranged downstream of the first heat exchanger (5), between the said first heat exchanger (5) and the expansion device (7), and a second junction point (32) arranged upstream of the compressor (3), between the second heat exchanger (9) and the said compressor (3),
the said heat storage circuit (A) comprising:
• a second expansion device (13) arranged downstream of the first junction point (31),
• a thermal battery (11) arranged downstream of the second expansion device (13),
• a bypass branch (A2) for bypassing the first heat exchanger (5) and connecting a fifth junction point (35), arranged upstream of the first heat exchanger (5), and a sixth junction point (36), arranged between the second expansion device (13) and the thermal battery (11),
**characterized in that** the said heat storage circuit (A) further comprises a connecting branch (A1) connecting a third junction point (33), arranged between the thermal battery (11) and the second junction point (32), and a fourth junction point (34), arranged between the first junction point (31) and the first expansion device (7).

2. Air conditioning loop (1) according to Claim 1, **characterized in that** it comprises an internal heat exchanger (17) that permits an exchange of heat between the refrigerant fluid leaving the first heat exchanger (5) and the refrigerant fluid leaving the second heat exchanger (9).

3. Air conditioning loop (1) according to either of the preceding claims, **characterized in that** the compressor (3) is an electric compressor and **in that** the fifth junction point (35) is arranged downstream of the compressor (3), between the said compressor (3) and the first heat exchanger (5).

4. Air conditioning loop (1) according to the preceding claim, **characterized in that** the compressor (3) is an electric compressor that is able to operate with a compression ratio of less than or equal to 1.5, preferably less than or equal to 1.3.

5. Air conditioning loop (1) according to either of Claims 3 and 4, **characterized in that** it comprises a device for management of the flow of refrigerant fluid so as to permit:
• redirection of the refrigerant fluid coming from the first heat exchanger (5) towards the first expansion device (7) and/or toward the second expansion device (13),
• redirection of the refrigerant fluid coming from the second expansion device (13) towards the thermal battery (11),
• redirection of the refrigerant fluid coming from the compressor (3) towards the thermal battery (11) or towards the first heat exchanger (5),
• redirection of the refrigerant fluid coming from the thermal battery (11) towards the second junction point (32) or towards the fourth junction point (34).

6. Air conditioning loop (1) according to the preceding claim, **characterized in that** the refrigerant fluid flow management device comprises:
• a first stop valve (41) arranged, in the direction of flow of the refrigerant fluid, upstream of the first junction point (31), between the fifth junction point (35) and the said first junction point (31),
• a second stop valve (42) arranged on the heat storage circuit (A), between the second junction point (32) and the third junction point (33),
• a third stop valve (43) arranged on the bypass branch (A2) between the fifth junction point (35) and the sixth junction point (36),
• a first check flap (51) arranged, in the direction of flow of the refrigerant fluid, between the first junction point (31) and the sixth junction point (36) so as to allow the refrigerant fluid to pass through only when it comes from the said first junction point (31),
• a second check flap (52) arranged on the connecting branch (A1) so as to allow the refrigerant fluid to pass through only when it comes from the third junction point (33), and
• a third check flap (53) arranged, in the direction of flow of the refrigerant fluid, between the second junction point (32) and the fifth junction point (35) so as to allow the refrigerant fluid to pass through only when it comes from the second junction point (32).

7. Air conditioning loop (1) according to either of Claims 1 and 2, **characterized in that** the fifth junction point (35) is arranged on the heat storage circuit (A) between the second junction point (32) and the third junction point (33), and **in that** the bypass branch (A2) comprises an additional electric compressor (301) that is able to make the heat transfer fluid flow from the fifth junction point (35) towards the sixth junction point (36).

8. Air conditioning loop (1) according to the preceding claim, **characterized in that** the additional electric compressor (301) is able to operate with a compression ratio of less than or equal to 1.5, preferably less than or equal to 1.3.

9. Air conditioning loop (1) according to either of Claims 7 and 8, **characterized in that** it comprises a device for managing the flow of refrigerant fluid so as to permit:
• redirection of the refrigerant fluid coming from the first heat exchanger (5) towards the first expansion device (7) and/or towards the second expansion device (13),
• redirection of the refrigerant fluid coming from the second expansion device (13) towards the thermal battery (11),
• redirection of the refrigerant fluid coming from the second heat exchanger (9) towards the compressor (3) or towards the additional electric compressor (301),
• redirection of the refrigerant fluid coming from the thermal battery (11) towards the second junction point (32) or towards the fourth junction point (34).

10. Air conditioning loop (1) according to the preceding claim, **characterized in that** the refrigerant fluid flow management device comprises:
• a first stop valve (41) arranged, in the direction of flow of the refrigerant fluid, upstream of the first junction point (31), between the second junction point (32) and the said first junction point (31),
• a second stop valve (42) arranged on the heat storage circuit (A), between the third junction point (33) and the fifth junction point (35),
• a third stop valve (43) arranged on the bypass branch (A2) between the fifth junction point (35) and the sixth junction point (36),
• a first check flap (51) arranged, in the direction of flow of the refrigerant fluid, between the first junction point (31) and the sixth junction point (36) so as to allow the refrigerant fluid to pass through only when it comes from the said first junction point (31),
• a second check flap (52) arranged on the connecting branch (A1) so as to allow the refrigerant fluid to pass through only when it comes from the third junction point (33), and
• a fourth check flap (54) arranged on the bypass branch (A2), in the direction of flow of the refrigerant fluid, downstream of the fifth junction point (35), between the said fifth junction point (35) and the sixth junction point (36) so as to allow the refrigerant fluid to pass through only when it comes from the said fifth junction point (35).

11. Method for operating an air conditioning loop (1) according to one of Claims 1 to 10, in a mixed mode of operation, in which the refrigerant fluid passes successively through the compressor (3), the first heat exchanger (5), the first junction point (31) where the flow of refrigerant fluid is split, and where:
• a first portion of the refrigerant fluid passes through the first expansion device (7) and the second heat exchanger (9) and arrives at the second junction point (32),
• a second portion of the refrigerant fluid passes through the second expansion device (13) and the thermal battery (11) and arrives at the second junction point (32); from the second junction point (32), the refrigerant fluid then arrives at the compressor (3).

12. Method for operating an air conditioning loop (1) according to one of Claims 1 to 10, in a cold storage mode, in which the refrigerant fluid passes successively through the compressor (3), the first heat exchanger (5), the first junction point (31) where all of the refrigerant fluid is redirected towards the second expansion device (13), whereupon the refrigerant fluid passes through the thermal battery (11) and then arrives at the compressor (3).

13. Method for operating an air conditioning loop (1) according to one of Claims 1 to 10, in a heat energy restitution operating mode, in which the refrigerant fluid coming from the bypass branch (A2) passes successively through the thermal battery (11), the connecting branch (A1), the first expansion device (7), the second heat exchanger (9) and returns to the bypass branch (A2).
